# EUROPEAN PATENT SPECIFICATION

(11) **EP 3 336 144 B1**
(45) Date of publication and mention of the grant of the patent: **17.07.2019**
(21) Application number: 17207622.6
(22) Date of filing: 15.12.2017
(51) Int. Cl.: C08L 69/00

(54) **THERMOPLASTIC RESIN COMPOSITION FOR LASER DIRECT STRUCTURING PROCESS AND ARTICLE COMPRISING THE SAME**
THERMOPLASTISCHE HARZZUSAMMENSETZUNG FÜR VERFAHREN ZUR LASER-DIREKTSTRUKTURIERUNG UND ARTIKEL DAMIT
COMPOSITION DE RÉSINE THERMOPLASTIQUE POUR PROCESSUS DE STRUCTURATION DIRECT AU LASER ET ARTICLE LA COMPRENANT

(30) Priority: 16.12.2016 KR 20160172443
(43) Date of publication of application: 20.06.2018
(73) Proprietor: Lotte Advanced Materials Co., Ltd., Jeollanam-do 59616 (KR)
(72) Inventor: JUNG, Yoo Jin, 16073 Uiwang-si, Gyeonggi-Do (KR); KIM, Jung Ki, 16073 Uiwang-si, Gyeonggi-Do (KR); PARK, Jee Kwon, 16073 Uiwang-Si, Gyeonggi-Do (KR); HONG, Sang Hyun, 16073 Uiwang-Si, Gyeonggi-Do (KR)
(74) Representative: Michalski Hüttermann & Partner Patentanwälte mbB

(56) References cited:
- WO-A1-2013/183788
- WO-A1-2016/175572
- US-A1- 2008 161 507

## Description

### Field of the Invention

The present invention relates to a thermoplastic resin composition for laser direct structuring and a molded article including the same. More particularly, the present invention relates to a thermoplastic resin composition for laser direct structuring which has good properties in terms of plating adhesion, appearance, and surface hardness, and a molded article including the same.

### Description of Related Art

Laser direct structuring (LDS) may be employed to deposit a metal layer on at least a portion of a surface of a molded article formed of a thermoplastic resin composition. LDS is a process performed prior to plating, wherein a region of the surface of the molded article to be plated is irradiated with laser beams to modify the region such that the region can have suitable properties for plating. For this purpose, a thermoplastic resin composition used in manufacture of the molded article is required to include an additive for LDS, which can form metal nuclei upon irradiation with laser beams. Upon receiving laser beams, the additive is decomposed to form metal nuclei. In addition, a surface of the molded article having been irradiated with laser beams becomes rougher. Due to presence of the metal nuclei and surface roughness, the laser beam-modified region can be suitable for plating.

LDS allows rapid and efficient formation of electric/electronic circuits on a three-dimensional shape of a molded article. For example, LDS may be utilized in manufacture of antennas for portable electronic devices, radio frequency identification (RFID) antennas, and the like. Resin compositions for laser direct structuring comprising a polycarbonate, a glass filler and a laser direct structuring additive are known from WO2013/183788.

Recently, with reduction in device weight and thickness, there is increasing demand for a thermoplastic resin composition having good mechanical properties and moldability (appearance characteristics). In addition, as the thickness of a micro-pattern (plating region) of a portable electronic device and the like is reduced, a plating layer is more likely to be delaminated.

Therefore, there is a need for a thermoplastic resin composition for LDS, which can have good properties in terms of plating adhesion, appearance, and surface hardness without deterioration in mechanical properties, and a molded article including the same.

The background technique of the present invention is disclosed in Korean Patent Publication No. 2011-0018319.

### Summary of the Invention

It is an aspect of the present invention to provide a thermoplastic resin composition for laser direct structuring which has good properties in terms of plating adhesion, appearance and surface hardness, and a molded article including the same.

One aspect of the present invention relates to a thermoplastic resin composition. The thermoplastic resin composition includes: a polycarbonate resin; a glycol-modified polyester resin having a 1,4-cyclohexane dimethanol (CHDM) content of ≥ 20 mol% to ≤ 100 mol% in a diol component; inorganic fillers; and an additive for laser direct structuring (LDS additive).

In the context of the present invention the term "laser direct structuring (LDS) additive" especially means, includes and/or comprises a compound which is capable of forming metal nuclei upon irradiation with laser beams.

The thermoplastic resin composition may include ≥ 0.1 parts by weight to ≤ 20 parts by weight of the LDS additive relative to 100 parts by weight of a base resin including ≥ 50 wt% to ≤ 90 wt% of the polycarbonate resin, ≥ 1 wt% to ≤ 20 wt% of the glycol-modified polyester resin, and ≥ 5 wt% to ≤ 40 wt% of the inorganic fillers.

The glycol-modified polyester resin may have a CHDM content of ≥ 35 mol% to ≤ 100 mol% in the diol component.

The inorganic fillers may include at least one of glass fibers, talc, wollastonite, whisker, silica, mica, and basalt fiber.

The LDS additive may include at least one of a heavy metal composite oxide spinel and a copper salt.

A weight ratio of the glycol-modified polyester resin to the inorganic fillers may range from ≥ 1:1 to ≤ 1:4.

A weight ratio of the glycol-modified polyester resin to the LDS additive may range from ≥ 1:1 to ≤ 4:1.

The thermoplastic resin composition may have a peel strength of ≥ 1.25 N/mm to ≤ 1.60 N/mm, as measured on an injection molded specimen having a size of 5 cm×1cm×1 mm at a peeling rate of 50 mm/min using a tensile tester after the specimen is subjected to laser direct structuring and plating to form a 35 µm thick stripe-type copper layer.

The thermoplastic resin composition may have a flow length of ≥ 135 mm to ≤ 170 mm, as measured on a specimen prepared by injection molding at a molding temperature of 300°C, mold temperature of 60°C, injection pressure of 50%, and injection rate of 50% using a spiral mold having a thickness of 1 mm and a width of 15 mm.

The thermoplastic resin composition may have a Rockwell hardness (R-Scale) of ≥ 115 to ≤ 130, as measured in accordance with ASTM D785.

The thermoplastic resin composition may have a moldability of ≥ 10 to ≤ 50 seconds, wherein the moldability indicates a cooling time required for molding a specimen in an injection molding process conducted at a molding temperature of 300°C, mold temperature of 60°C, injection pressure of 50%, and injection rate of 50% using a spiral mold having a thickness of 1 mm and a width of 15 mm.

Another aspect of the present invention relates to a molded article formed of the thermoplastic resin composition as set forth above.

The molded article may include a metal layer on at least a portion of a surface thereof, wherein the metal layer is formed by laser direct structuring and plating.

### Brief Description of Drawings

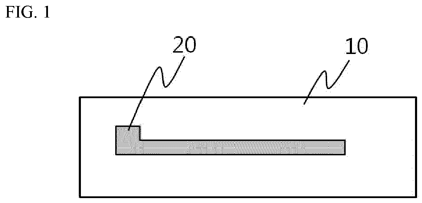

FIG. 1 is a schematic view of a molded article according to one embodiment of the present invention.

### Detailed Description of the Invention

Hereinafter, embodiments of the present invention will be described in detail.

A thermoplastic resin composition according to the present invention may be used in a laser direct structuring (LDS) process and includes (A) a polycarbonate resin; (B) a glycol-modified polyester resin; (C) inorganic fillers; and (D) an additive for laser direct structuring (hereinafter, "LDS additive").

### (A) Polycarbonate resin

According to the present invention, the polycarbonate resin may include any typical polycarbonate resin used in thermoplastic resin compositions. For example, the polycarbonate resin may be an aromatic polycarbonate resin prepared by reacting diphenols (aromatic diol compounds) with a carbonate precursor such as phosgene, halogen formate, or carbonate diester.

Examples of the diphenols may include 4,4'-biphenol, 2,2-bis(4-hydroxyphenyl)-propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis-(3,5-dichloro-4-hydroxyphenyl)propane, 2,2-bis(3-methyl-4-hydroxyphenyl)propane, and 2,2-bis(3,5-dimethyl-4-hydroxyphenyl)propane, without being limited thereto. For example, the diphenols may be 2,2-bis-(4-hydroxyphenyl)propane, 2,2-bis(3,5-dichloro-4-hydroxyphenyl)propane, 2,2-bis(3-methyl-4-hydroxyphenyl)propane, 2,2-bis(3,5-dimethyl-4-hydroxyphenyl)propane, or 1,1-bis(4-hydroxyphenyl)cyclohexane, specifically 2,2-bis-(4-hydroxyphenyl)propane, which is also referred to as bisphenol A.

Examples of the carbonate precursor may include dimethyl carbonate, diethyl carbonate, dibutyl carbonate, dicyclohexyl carbonate, diphenyl carbonate, ditolyl carbonate, bis(chlorophenyl) carbonate, m-cresyl carbonate, dinaphthyl carbonate, carbonyl chloride (phosgene), diphosgene, triphosgene, carbonyl bromide, and bishaloformate. These may be used alone or as a mixture thereof.

The polycarbonate resin may be a branched polycarbonate resin. For example, the polycarbonate resin may be prepared by adding a tri- or higher polyfunctional compound, specifically, a tri- or higher valent phenol group-containing compound in an amount of ≥ 0.05 mol% to ≤ 2 mol% based on the total number of moles of the diphenols used in polymerization.

The polycarbonate resin may be a homopolycarbonate resin, a copolycarbonate resin, or a blend thereof. In addition, the polycarbonate resin may be partly or completely replaced by an aromatic polyester-carbonate resin obtained by polymerization in the presence of an ester precursor, for example, a bifunctional carboxylic acid.

In one embodiment, the polycarbonate resin may have a weight average molecular weight (Mw) of ≥ 10,000 g/mol to ≤ 200,000 g/mol, for example, ≥ 15,000 g/mol to ≤ 40,000 g/mol, as measured by gel permeation chromatography (GPC). Within this range, the thermoplastic resin composition can have good properties in terms of impact resistance, rigidity, and heat resistance.

In one embodiment, the polycarbonate resin may be present in an amount of ≥ 50 wt% to ≤ 90 wt%, for example, ≥ 60 wt% to ≤ 80 wt%, based on the total weight of a base resin ((A)+(B)+(C)) including the polycarbonate resin (A), the glycol-modified polyester resin (B), and the inorganic fillers (C). In some embodiments, the base resin may include the polycarbonate resin in an amount of about 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, or 90 wt%. Further, according to some embodiments of the present invention, the polycarbonate resin may be present in an amount of from about any of the foregoing amounts to about any other of the foregoing amounts. Within this range, the thermoplastic resin composition can have good properties in terms of impact resistance, rigidity, heat resistance, coating adhesion, appearance, and surface hardness.

### (B) Glycol-modified polyester resin

The glycol-modified polyester resin is a polyester resin having a 1,4-cyclohexane dimethanol (CHDM) content of ≥ 20 mol% to ≤ 100 mol% in a diol component and serves to improve plating adhesion, appearance (moldability) and surface hardness of the thermoplastic resin composition without deterioration in rigidity, in conjunction with the LDS additive and an inorganic additive.

In one embodiment, the glycol-modified polyester resin may be prepared by polycondensation of a dicarboxylic acid component including terephthalic acid with a diol component including ≥ 20 mol% to ≤ 100 mol%, ≥ 35 mol% to ≤ 100 mol% of CHDM and ≥ 0 wt% to ≤ 80 wt%, for example, ≥ 0 wt% to ≤ 65 wt% of C₂ to C₆ alkylene glycol. If the content of the CHDM in the diol component is less than 20 mol%, the thermoplastic resin composition can suffer from deterioration in moldability and surface hardness.

In some embodiments, the diol component may include CHDM in an amount of about 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, or 100 mol%. Further, according to some embodiments of the present invention, CHDM may be present in an amount of from about any of the foregoing amounts to about any other of the foregoing amounts.

In some embodiments, the diol component may include C₂ to C₆ alkylene glycol in an amount of 0 (C₂ to C₆ alkylene glycol is not present), about 0 (C₂ to C₆ alkylene glycol is present), 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, or 80 mol%. Further, according to some embodiments of the present invention, C₂ to C₆ alkylene glycol may be present in an amount of from about any of the foregoing amounts to about any other of the foregoing amounts.

In one embodiment, the glycol-modified polyester resin may have an intrinsic viscosity of ≥ 0.5 dl/g to ≤ 0.8 dl/g, for example, ≥ 0.55 dl/g to ≤ 0.75 dl/g, as measured at 35°C using an o-chlorophenol solution (concentration: 0.5 g/dl). Within this range, compatibility between the components of the thermoplastic resin composition can be improved and the thermoplastic resin composition can have good mechanical properties, moldability (appearance characteristics), and surface hardness.

In one embodiment, the glycol-modified polyester resin may be present in an amount of ≥ 1 wt% to ≤ 20 wt%, for example, ≥ 5 wt% to ≤ 15 wt%, based on the total weight of the base resin (((A)+(B)+(C)) including the polycarbonate resin (A), the glycol-modified polyester resin (B), and the inorganic fillers (C). In some embodiments, the base resin may include the glycol-modified polyester resin in an amount about 1, 2, 3, 4, 5, 6, 7, 8, 9, 10, 11, 12, 13, 14, 15, 16, 17, 18, 19, or 20 wt%. Further, according to some embodiments of the present invention, the glycol-modified polyester resin may be present in an amount of from about any of the foregoing amounts to about any other of the foregoing amounts. Within this range, the thermoplastic resin composition can have good properties in terms of moldability (appearance characteristics), surface hardness, rigidity, and plating adhesion.

### (C) Inorganic fillers

According to the present invention, the inorganic fillers serve to improve mechanical properties of the thermoplastic resin composition, such as impact resistance and rigidity, and may include any typical inorganic fillers other than the LDS additive. For example, the inorganic fillers may include glass fibers, talc, wollastonite, whisker, silica, mica, basalt fiber, and mixtures thereof. Specifically, the inorganic fillers may be glass fibers.

In one embodiment, the inorganic fillers may be glass fibers having a circular shape in cross-section and having a cross-sectional diameter of ≥ 5 µm to ≤ 20 µm and an as-manufactured length of ≥ 2 mm to ≤ 5 mm, as measured using an optical microscope, or glass fibers having a plate shape in cross-section and having a cross-sectional aspect ratio (major diameter/minor diameter) of ≥ 1.5 to ≤ 10 and an as-manufactured length of ≥ 2 mm to ≤ 5 mm. Within this range, the inorganic fillers can improve mechanical properties and surface hardness of the thermoplastic resin composition without deterioration in other properties such as appearance characteristics.

In one embodiment, the inorganic fillers may be present in an amount of ≥ 5 wt% to ≤ 40 wt%, for example, ≥ 10 wt% to ≤ 30 wt%, based on the total weight of the base resin (((A)+(B)+(C)) including the polycarbonate resin (A), the glycol-modified polyester resin (B), and the inorganic fillers (C). In some embodiments, the base resin may include the inorganic fillers in an amount about 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, or 40 wt%. Further, according to some embodiments of the present invention, the inorganic fillers may be present in an amount of from about any of the foregoing amounts to about any other of the foregoing amounts. Within this range, the thermoplastic resin composition can have good properties in terms of impact resistance, rigidity, surface hardness, and appearance.

In one embodiment, a weight ratio ((B):(C)) of the glycol-modified polyester resin (B) to the inorganic fillers (C) may range from ≥ 1:1 to ≤ 1:4, for example ≥ 1:1 to ≤ 1:3. In some embodiments, the weight ratio ((B):(C)) of the glycol-modified polyester resin (B) to the inorganic fillers (C) may be about 1:1, 1:2, 1:3, or 1:4. Within this range, the thermoplastic resin composition can have good appearance characteristics and moldability.

### (D) LDS additive

According to the present invention, the LDS additive serves to form metal nuclei upon irradiation with laser beams and may include any typical LDS additive used in resin compositions for LDS.

In one embodiment, the LDS additive may include a heavy metal composite oxide spinel and/or a copper salt.

In one embodiment, the heavy metal composite oxide spinel may be represented by Formula 1.

[Formula 1] AB₂O₄

wherein A is a metal cation having a valence of 2, for example, magnesium, copper, cobalt, zinc, tin, iron, manganese, nickel, and a combination thereof, and B is a metal cation having a valence of 3, for example, manganese, nickel, copper, cobalt, tin, titanium, iron, aluminum, chromium, and a combination thereof.

Examples of the LDS additive may include copper-iron spinel, magnesium-aluminum oxides, copper-chromium-manganese oxides, copper-manganese-iron oxides (oxygen may be optionally bonded to the aforementioned compounds), and salts and oxides of copper, for example, copper oxide (I), copper oxide (II), copper phosphate, copper sulfate, cuprous thiocyanate, metal complexes, chelates of copper, tin, nickel, cobalt, silver and palladium, or mixtures thereof; copper-chromium-manganese oxide, copper-manganese-iron oxide, copper-chromium oxide, zinc-iron oxide, cobalt-chromium oxide, cobalt-aluminum oxide, magnesium-aluminum oxide, and mixtures thereof; surface-treated products thereof; and/or oxygen-bonded products thereof. Specifically, the LDS additive may include copper hydroxide phosphate, copper-chromium oxide spinel, copper phosphate, copper sulfate, cuprous thiocyanate, and combinations thereof.

In one embodiment, the LDS additive may be present in an amount of ≥ 0.1 parts by weight to ≤ 20 parts by weight, for example, ≥ 1 part by weight to ≤ 15 parts by weight, relative to 100 parts by weight of the base resin ((A)+(B)+(C)). In some embodiments, the thermoplastic resin composition may include the LDS additive in an amount about 0.1, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, or 20 parts by weight. Further, according to some embodiments of the present invention, the LDS additive may be present in an amount of from about any of the foregoing amounts to about any other of the foregoing amounts. Within this range, the thermoplastic resin composition can have good properties in terms of coating adhesion, impact resistance, rigidity, surface hardness, and appearance.

In one embodiment, a weight ratio ((B):(D)) of the glycol-modified polyester resin (B) to the LDS additive (D) may range from ≥ 1:1 to ≤ 4:1, for example, ≥ 2:1 to ≤ 3:1. In some embodiments, the weight ratio ((B):(D)) of the glycol-modified polyester resin (B) to the LDS additive (D) may be about 1:1, 2:1, 3:1, or 4:1. Within this range, the thermoplastic resin composition can have further improved coating adhesion.

In one embodiment, the thermoplastic resin composition may further include any typical additive commonly used in thermoplastic resin compositions without altering the effects of the present invention, as needed. Examples of the additive may include lubricants, colorants, stabilizers, antioxidants, antistatic agents, and flow enhancers, without being limited thereto. When the thermoplastic resin composition includes the additive, the additive may be present in an amount of ≥ 0.01 parts by weight to ≤ 20 parts by weight relative to 100 parts by weight of the base resin.

In one embodiment, the thermoplastic resin composition may be prepared in pellet form by mixing the aforementioned components, followed by melt extrusion using a typical twin-screw extruder at ≥ 200°C to ≤ 300°C, for example, ≥ 250°C to ≤ 280°C.

In one embodiment, the thermoplastic resin composition may have a peel strength of ≥ 1.25 N/mmto ≤ 1.60 N/mm, for example, ≥ 1.29 N/mm to ≤ 1.55 N/mm, as measured on an injection molded specimen having a size of 5 cm×1 cm×1 mm at a peeling rate of 50 mm/min using a tensile tester after the specimen is subjected to an LDS process and a coating process to form a 35 µm thick stripe-type copper layer.

In one embodiment, the thermoplastic resin composition has a flow length of ≥ 135 mm to ≤ 170 mm, for example, ≥ 145 mm to ≤ 170 mm, as measured on a specimen prepared by injection molding at a molding temperature of 300°C, mold temperature of 60°C, injection pressure of 50%, and injection rate of 50% using a spiral mold having a thickness of 1 mm and a width of 15 mm.

In one embodiment, the thermoplastic resin composition may have a Rockwell hardness (R-Scale) of ≥ 115 to ≤ 130, for example, ≥ 116 to ≤ 125, as measured in accordance with ASTM D785.

In one embodiment, the thermoplastic resin composition has a moldability of ≥ 10 to ≤ 50 seconds, wherein the moldability indicates a cooling time required for molding a specimen in an injection molding process conducted at a molding temperature of 300°C, mold temperature of 60°C, injection pressure of 50%, and injection rate of 50% using a spiral mold having a thickness of 1 mm and a width of 15 mm.

In accordance with another aspect of the present invention, a molded article is formed of the thermoplastic resin composition as set forth above. For example, the molded article may be prepared by any suitable molding method, such as injection molding, double injection molding, blowing, extruding, and thermoforming, using the thermoplastic resin composition. The molded article can be easily formed by a person having ordinary skill in the art to which the present invention pertains.

FIG. 1 is a schematic view of a molded article according to one embodiment of the present invention. It should be noted that the drawing is exaggerated in thickness of lines or size of components for descriptive convenience and clarity only. Referring to FIG. 1, a molded article 10 according to this embodiment may include a metal layer 20 on at least a portion of a surface thereof, wherein the metal layer is formed by LDS and plating. In one embodiment, the molded article 10 may be a circuit carrier used in manufacture of antennas. For example, the molded article 10 may be manufactured by fabricating a preliminary molded article 10 by injection molding or the like using the thermoplastic resin composition and irradiating a specific region (a portion to be formed with the metal layer 20) of the surface of the preliminary molded article 10 with laser beams, followed by metallization (plating) of the irradiated region to form the metal layer 20.

In one embodiment, the LDS additive included in the preliminary molded article 10 is decomposed to form metal nuclei upon irradiation with laser beams. In addition, the laser beam-irradiated region has a suitable surface roughness for plating. Here, the laser beams have a wavelength of 248 nm, 308 nm, 355 nm, 532 nm, 1,064 nm, or 10,600 nm.

In one embodiment, the metallization may be performed by any typical plating process. For example, the metallization may include dipping the laser beam-irradiated preliminary molded article 10 in at least one electroless plating bath to form the metal layer 20 (electrically conductive path) on the laser beam-irradiated region of the surface of the preliminary molded article 10. Here, examples of the electroless plating bath may include a copper plating bath, a gold plating bath, a nickel plating bath, a silver plating bath, a zinc plating bath, and a tin plating bath.

The molded article having the metal layer formed on at least a portion of the surface thereof by LDS can be easily manufactured by a person having ordinary skill in the art to which the present invention pertains.

Next, the present invention will be described in more detail with reference to some examples. It should be understood that these examples are provided for illustration only and are not to be in any way construed as limiting the present invention.

### EXAMPLE

Details of components used in Examples and Comparative Examples are as follows:
(A) Polycarbonate resin
   A bisphenol-A polycarbonate resin having a weight average molecular weight of 23,000 g/mol
(B) Glycol-modified polyester resin
(B1) A glycol-modified polyester resin (dicarboxylic acid component: terephthalic acid, intrinsic viscosity: 0.65 dl/g) in which a diol component includes 100 mol% of 1,4-cyclohexane dimethanol (CHDM)
(B2) A glycol-modified polyester resin (dicarboxylic acid component: terephthalic acid, diol component: 40 mol% of CHDM and 60 mol% of ethylene glycol, intrinsic viscosity: 0.65 dl/g) in which a diol component includes 40 mol% of CHDM
(B3) A glycol-modified polyester resin (dicarboxylic acid component: terephthalic acid, diol component: 20 mol% of CHDM and 80 mol% of ethylene glycol, intrinsic viscosity: 0.67 dl/g) in which a diol component includes 20 mol% of CHDM
(B4) A glycol-modified polyester resin (dicarboxylic acid component: terephthalic acid, diol component: 15 mol% of CHDM and 85 mol% of ethylene glycol, intrinsic viscosity: 0.68 dl/g) in which a diol component includes 15 mol% of CHDM
(C) Inorganic fillers
   Glass fibers (CS03-183F, Owens Corning Co., Ltd.)
(D) LDS additive
   Copper hydroxide phosphate

### Examples 1 to 7 and Comparative Examples 1 to 5

The aforementioned components were mixed in amounts as listed in Table 1, followed by melt extrusion at a barrel temperature of 250°C to 300°C using a twin-screw extruder (L/D=36, φ=45 mm), thereby preparing a thermoplastic resin composition in pellet form. The prepared pellets were dried at 80°C to 100°C for 4 hours or more, followed by injection molding using a 6 oz. injection molding machine (molding temperature: 300°C, mold temperature: 60°C), thereby preparing a specimen. The prepared specimen was evaluated as to the following properties and results are shown in Table 1.

### Property evaluation

(1) Plateability (plating adhesion): An injection molded specimen having a size of 5 cm×1 cm×1 mm was subjected to aging at 25°C for 6 hours, followed by modification of a surface of the specimen in stripe form by laser direct structuring, and then a 35 µm thick stripe-type copper layer was formed on the surface of the specimen by plating (copper electroless plating), followed by measurement of peel strength (unit: N/mm) at a peeling rate of 50 mm/min using a tensile tester (Zwick GmbH & Co. KG, Ulm,.).
(2) Moldability (flowability): Flow length (spiral length, unit: mm) was measured on a specimen prepared by injection molding at a molding temperature of 300°C, mold temperature of 60°C, injection pressure of 50%, and injection rate of 50% using a spiral mold having a thickness of 1 mm and a width of 15 mm. A longer flow length indicates better flowability (moldability).
(3) Surface hardness: Rockwell hardness (R-scale) was measured in accordance with ASTM D785.
(4) Moldability (cooling time after injection): In an injection molding process conducted at a molding temperature of 300°C, mold temperature of 60°C, injection pressure of 50%, and injection rate of 50% using a spiral mold having a thickness of 1 mm and a width of 15 mm, a cooling time (unit: second) required for molding (completing) a specimen was measured.

**Table 1**

| | | Example | | | | | | | Comparative Example | | | | |
|---|---|---|---|---|---|---|---|---|---|---|---|---|---|
| | | 1 | 2 | 3 | 4 | 5 | 6 | 7 | 1 | 2 | 3 | 4 | 5 |
| (A) (wt%) | | 80 | 80 | 70 | 70 | 60 | 60 | 80 | 90 | 80 | 70 | 80 | 70 |
| (B) (wt%) | (B1) | 10 | - | 10 | - | 10 | | - | - | - | - | - | - |
| | (B2) | - | 10 | - | 10 | - | 10 | - | - | - | - | - | - |
| | (B3) | - | - | - | - | - | - | 10 | - | - | - | - | - |
| | (B4) | - | - | - | - | - | - | - | - | - | - | 10 | 10 |
| (C) (wt%) | | 10 | 10 | 20 | 20 | 30 | 30 | 10 | 10 | 20 | 30 | 10 | 20 |
| (D) (parts by weight) | | 5 | 5 | 5 | 5 | 5 | 5 | 5 | 5 | 5 | 5 | 5 | 5 |
| Peel strength (N/mm) | | 1.43 | 1.47 | 1.39 | 1.38 | 1.31 | 1.29 | 1.40 | 1.25 | 1.21 | 1.19 | 1.42 | 1.38 |
| Flow length (mm) | | 160 | 161 | 154 | 158 | 150 | 153 | 166 | 130 | 123 | 118 | 160 | 153 |
| Rockwell hardness | | 119 | 117 | 118 | 117 | 117 | 116 | 116 | 120 | 122 | 125 | 108 | 110 |
| Cooling time after injection (sec) | | 30 | 41 | 33 | 35 | 26 | 28 | 50 | 25 | 21 | 20 | 80 | 70 |

From the results shown in Table 1, it can be seen that the thermoplastic resin composition according to the present invention had good properties in terms of plating adhesion, moldability (flowability), surface hardness, and balance therebetween.

Conversely, the thermoplastic resin compositions of Comparative Examples 1 to 3 free from the glycol-modified polyester resin according to the present invention had poor properties in terms of plating adhesion and moldability, and the thermoplastic resin compositions of Comparative Examples 4 to 5 using a glycol-modified polyester resin having a CHDM content of 15 mol% in the diol component had poor properties in terms of surface hardness and moldability.

It should be understood that various modifications, changes, alterations, and equivalent embodiments can be made by those skilled in the art without departing from the scope of the invention.

## Claims

1. A thermoplastic resin composition comprising:
a polycarbonate resin;
a glycol-modified polyester resin having 1,4-cyclohexane dimethanol (CHDM) content of ≥ 20 mol% to ≤ 100 mol% in a diol component;
inorganic fillers; and
an additive for laser direct structuring (LDS additive).

2. The thermoplastic resin composition according to claim 1, comprising: ≥ 0.1 parts by weight to ≤ 20 parts by weight of the LDS additive relative to 100 parts by weight of a base resin comprising ≥ 50 wt% to ≤ 90 wt% of the polycarbonate resin, ≥ 1 wt% to ≤ 20 wt% of the glycol-modified polyester resin, and ≥ 5 wt% to ≤ 40 wt% of the inorganic fillers.

3. The thermoplastic resin composition according to claim 1 or 2, wherein the glycol-modified polyester resin has a CHDM content of ≥ 35 mol% to ≤ 100 mol% in the diol component.

4. The thermoplastic resin composition according to any of the claims 1 to 3, wherein the inorganic fillers comprise at least one of glass fibers, talc, wollastonite, whisker, silica, mica, and basalt fiber.

5. The thermoplastic resin composition according to any of the claims 1 to 4, wherein the LDS additive comprises at least one of a heavy metal composite oxide spinel and a copper salt.

6. The thermoplastic resin composition according to any of the claims 1 to 5, wherein a weight ratio of the glycol-modified polyester resin to the inorganic fillers ranges from ≥ 1:1 to ≤ 1:4.

7. The thermoplastic resin composition according to any of the claims 1 to 6, wherein a weight ratio of the glycol-modified polyester resin to the LDS additive ranges from ≥ 1:1 to ≤ 4:1.

8. The thermoplastic resin composition according to any of the claims 1 to 7, wherein the thermoplastic resin composition has a peel strength of ≥ 1.25 N/mm to ≤ 1.60 N/mm, as measured on an injection molded specimen having a size of 5 cm×1 cm×1 mm at a peeling rate of 50 mm/min using a tensile tester after the specimen is subjected to laser direct structuring and plating to form a 35 µm thick stripe-type copper layer.

9. The thermoplastic resin composition according to any of the claims 1 to 8, wherein the thermoplastic resin composition has a flow length of ≥ 135 mm to ≤ 170 mm, as measured on a specimen prepared by injection molding at a molding temperature of 300°C, mold temperature of 60°C, injection pressure of 50%, and injection rate of 50% using a spiral mold having a thickness of 1 mm and a width of 15 mm.

10. The thermoplastic resin composition according to any of the claims 1 to 9, wherein the thermoplastic resin composition has a Rockwell hardness (R-Scale) of > 115 to ≤ 130, as measured in accordance with ASTM D785.

11. The thermoplastic resin composition according to any of the claims 1 to 10, wherein the thermoplastic resin composition has a moldability of ≥ 10 to ≤ 50 seconds, where the moldability indicates a cooling time required for molding a specimen in an injection molding process conducted at a molding temperature of 300°C, mold temperature of 60°C, injection pressure of 50%, and injection rate of 50% using a spiral mold having a thickness of 1 mm and a width of 15 mm.

12. A molded article (10) formed of the thermoplastic resin composition according to any one of claims 1 to 11.

13. The molded article according to claim 12, comprising a metal layer (20) on at least a portion of a surface thereof, the metal layer (20) being formed by laser direct structuring and plating.

## Patentansprüche

1. Thermoplastische Harzzusammensetzung, mit:
einem Polycarbonatharz;
einem glykolmodifizierten Polyesterharz mit einem Anteil an 1,4-Cyclohexandimethanol (CHDM) von ≥ 20 Mol-% bis ≤ 100 Mol-% in einer Diolkomponente;
anorganischen Füllstoffen; und
einem Additiv zur Laserdirektstrukturierung (LDS-Additiv).

2. Thermoplastische Harzzusammensetzung nach Anspruch 1, mit: ≥ 0,1 Gewichtsteilen bis ≤ 20 Gewichtsteilen des LDS-Additivs bezogen auf 100 Gewichtsteile eines Basisharzes, das ≥ 50 Gew.-% bis ≤ 90 Gew.-% des Polycarbonatharzes, ≥ 1 Gew.-% bis ≤ 20 Gew.-% des glykolmodifizierten Polyesterharzes und ≥ 5 Gew.-% bis ≤ 40 Gew.-% der anorganischen Füllstoffe enthält.

3. Thermoplastische Harzzusammensetzung nach Anspruch 1 oder 2, wobei das glykolmodifizierte Polyesterharz einen CHDM-Gehalt von ≥ 35 Mol.-% bis ≤ 100 Mol-% in der Diolkomponente aufweist.

4. Thermoplastische Harzzusammensetzung nach einem der Ansprüche 1 bis 3, wobei die anorganischen Füllstoffe mindestens eine Komponente unter Glasfasern, Talk, Wollastonit, Whiskern, Siliciumdioxid, Glimmer und/oder Basaltfasern aufweisen.

5. Thermoplastische Harzzusammensetzung nach einem der Ansprüche 1 bis 4, wobei das LDS-Additiv mindestens eine Komponente unter einem Schwermetall-Mischoxid-Spinell und einem Kupfersalz aufweist.

6. Thermoplastische Harzzusammensetzung nach einem der Ansprüche 1 bis 5, wobei das Gewichtsverhältnis des glykolmodifizierten Polyesterharzes zu den anorganischen Füllstoffen im Bereich von ≥ 1:1 bis ≤ 1:4 liegt.

7. Thermoplastische Harzzusammensetzung nach einem der Ansprüche 1 bis 6, wobei das Gewichtsverhältnis des glykolmodifizierten Polyesterharzes zum LDS-Additiv im Bereich von ≥ 1:1 bis ≤ 4:1 liegt.

8. Thermoplastische Harzzusammensetzung nach einem der Ansprüche 1 bis 7, wobei die thermoplastische Harzzusammensetzung eine Schälfestigkeit von ≥ 1,25 N/mm bis ≤ 1,60 N/mm aufweist, gemessen bezüglich einer spritzgegossenen Probe mit einer Größe von 5 cm × 1 cm × 1 mm bei einer Schälrate von 50 mm/min unter Verwendung einer Zugfestigkeitsprüfmaschine, nachdem die Probe einer Laserdirektstrukturierung und einem Plattierungsprozess unterzogen wurde, um eine 35 µm dicke streifenförmige Kupferschicht auszubilden.

9. Thermoplastische Harzzusammensetzung nach einem der Ansprüche 1 bis 8, wobei die thermoplastische Harzzusammensetzung eine Fließstrecke von ≥ 135 mm bis ≤ 170 mm hat, gemessen bezüglich einer Probe, die durch Spritzgießen bei einer Formungstemperatur von 300°C, einer Formtemperatur von 60°C, einem Einspritzdruck von 50% und einer Einspritzrate von 50% unter Verwendung einer Spiralform mit einer Dicke von 1 mm und einer Breite von 15 mm hergestellt wurde.

10. Thermoplastische Harzzusammensetzung nach einem der Ansprüche 1 bis 9, wobei die thermoplastische Harzzusammensetzung eine Rockwell-Härte (R-Skala) von ≥ 115 bis ≤ 130, gemessen gemäß ASTM D785, aufweist.

11. Thermoplastische Harzzusammensetzung nach einem der Ansprüche 1 bis 10, wobei die thermoplastische Harzzusammensetzung eine Formbarkeit von ≥ 10 bis ≤ 50 Sekunden aufweist, wobei die Formbarkeit eine Abkühlzeit anzeigt, die zum Formen einer Probe in einem Spritzgussverfahren erforderlich ist, das bei einer Formungstemperatur von 300°C, einer Formtemperatur von 60°C, einem Einspritzdruck von 50% und Einspritzrate von 50% unter Verwendung einer Spiralform mit einer Dicke von 1 mm und einer Breite von 15 mm ausgeführt wird.

12. Formartikel (10), der aus der thermoplastischen Harzzusammensetzung nach einem der Ansprüche 1 bis 11 hergestellt ist.

13. Formartikel nach Anspruch 12, mit einer Metallschicht (20) auf mindestens einem Teil einer Oberfläche davon, wobei die Metallschicht (20) durch Laserdirektstrukturieren und Plattieren ausgebildet ist.

## Revendications

1. Composition à base de résine thermoplastique comprenant :
une résine polycarbonate ;
une résine polyester modifiée au glycol ayant un contenu en 1,4-cyclohexane diméthanol (CHDM) de ≥ 20 %mol à ≤ 100 %mol dans un composant diol ;
des agents de remplissage inorganiques ; et
un additif pour structuration directe par laser (additif LDS).

2. Composition à base de résine thermoplastique selon la revendication 1, comprenant : de ≥ 0,1 parties en poids à ≤ 20 parties en poids de l'additif LDS relativement à 100 parties en poids d'une résine de base comprenant de ≥ 50 %pds à ≤ 90 %pds de la résine polycarbonate, de ≥ 1 %pds à ≤ 20 %pds de la résine polyester modifiée au glycol, et de ≥ 5 %pds à ≤ 40 %pds des agents de remplissage inorganiques.

3. Composition à base de résine thermoplastique selon la revendication 1 ou la revendication 2, dans laquelle la résine polyester modifiée au glycol a un contenu en CHDM de ≥ 35 %pds à ≤ 100 %pds dans le composant diol.

4. Composition à base de résine thermoplastique selon l'une quelconque des revendications 1 à 3, dans laquelle les agents de remplissage organiques comprennent au moins un de fibres de verre, talc, wollastonite, trichite, silice, mica, et fibre de basalte.

5. Composition à base de résine thermoplastique selon l'une quelconque des revendications 1 à 4, dans laquelle l'additif LDS comprend au moins un composite d'oxyde à métaux lourds de type spinelle et un sel de cuivre.

6. Composition à base de résine thermoplastique selon l'une quelconque des revendications 1 à 5, dans laquelle un ratio massique de la résine polyester modifiée au glycol sur les agents de remplissage inorganiques est compris dans la plage entre de ≥ 1:1 à ≤ 1:4.

7. Composition à base de résine thermoplastique selon l'une quelconque des revendications 1 à 6, dans laquelle un ratio massique de la résine polyester modifiée au glycol sur l'additif LDS est compris dans la plage entre de ≥ 1:1 à ≤ 4:1.

8. Composition à base de résine thermoplastique selon l'une quelconque des revendications 1 à 7, dans laquelle la composition de résine thermoplastique a une force de pelage de ≥ 1.25 N/mm à ≤ 1.60 N/mm, mesurée sur un spécimen moulé par injection ayant une taille de 5 cm x1 cm x 1 mm à une vitesse de pelage de 50 mm/min en utilisant un dynamomètre après que le spécimen a été soumis à une structuration directe par laser et placage pour former une couche de cuivre à bandes d'épaisseur 35 µm.

9. Composition à base de résine thermoplastique selon l'une quelconque des revendications 1 à 8, dans laquelle la composition de résine thermoplastique a une longueur d'écoulement de ≥ 135 mm à ≤ 170 mm, mesurée sur un spécimen préparé par moulage par injection à une température de moulage de 300°C, une température de moule de 60°C, une pression d'injection de 50%, et un taux d'injection de 50% en utilisant un moule en spirale ayant une épaisseur de 1 mm et une largeur de 15 mm.

10. Composition à base de résine thermoplastique selon l'une quelconque des revendications 1 à 9, dans laquelle la composition de résine thermoplastique a une dureté Rockwell (échelle R) de ≥ 115 à ≤ 130, mesurée conformément à l'ASTM D785.

11. Composition à base de résine thermoplastique selon l'une quelconque des revendications 1 à 10, dans laquelle la composition de résine thermoplastique a une aptitude au moulage de ≥ 10 à ≤ 50 secondes, où l'aptitude au moulage indique un temps de refroidissement requis pour le moulage d'un spécimen dans un procédé de moulage par injection conduit à un température de moulage de 300°C, une température de moule de 60°C, une pression d'injection de 50%, et un taux d'injection de 50% en utilisant un moule en spirale ayant une épaisseur de 1 mm et une largeur de 15 mm.

12. Article moulé (10) formé à partir de la composition à base de résine thermoplastique selon l'une quelconque des revendications 1 à 11.

13. Article moulé selon la revendication 12, comprenant une couche métallique (20) sur au moins une partie de celui-ci, la couche métallique (20) étant formée par structuration directe par laser et placage.
